(19) Europäisches Patentamt
European Patent Office
Office européen des brevets

(11) EP 4 793 473 A1

(12) **EUROPEAN PATENT APPLICATION**
published in accordance with Art. 153(4) EPC

(43) Date of publication:
**19.08.2026 Bulletin 2026/34**

(21) Application number: **25804574.9**

(22) Date of filing: **26.06.2025**

(51) International Patent Classification (IPC):
***F01N 3/28*** (2006.01) ***D04H 1/4209*** (2012.01)
***D04H 3/002*** (2012.01) ***D04H 3/105*** (2012.01)
***D04H 18/02*** (2012.01)

(86) International application number:
**PCT/JP2025/023079**

(87) International publication number:
**WO 2026/140300 (02.07.2026 Gazette 2026/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 JP 2024228072**

(71) Applicant: **MAFTEC Co., Ltd.**
**Tokyo 100-0005 (JP)**

(72) Inventors:
- **KIMURA, Yusuke**
  **Tokyo 1000-005 (JP)**
- **SATO, Takashi**
  **Tokyo 1000-005 (JP)**

(74) Representative: **Meissner Bolte Partnerschaft mbB**
**Patentanwälte Rechtsanwälte**
**Postfach 86 06 24**
**81633 München (DE)**

(54) **HOLDING MEMBER FOR EXHAUST GAS PURIFICATION DEVICE AND EXHAUST GAS PURIFICATION DEVICE**

(57) A holding material for an exhaust gas purification device includes an inorganic fiber molded body formed of an inorganic fiber and does not contain a binder. The inorganic fiber molded body has a needle mark extending in a thickness direction, and a warp yarn made of the inorganic fiber extending in the thickness direction is present in the needle mark,
a needle mark density is 8.0 to 18.0 marks/cm$^2$
the number of effective warp yarns is 2.8 to 6.0 yarns/cm$^2$; and
the effective warp yarn represents a warp yarn having a diameter of 100 $\mu$m or more and a protrusion length of 2 mm or more among all warp yarns protruding from one peeled surface and another peeled surface in a range of 50 mm $\times$ 50 mm when the following peeling method is performed.

50mm
12
10a
F
10b
10
12

FIG. 3

EP 4 793 473 A1

## Description

Technical Field

The present disclosure relates to a holding material for an exhaust gas purification device and an exhaust gas purification device.

Background Art

An inorganic fiber molded body with inorganic fibers such as a ceramic fiber molded into a mat shape is widely used in an application that involves exposure to a high-temperature condition, such as in industrial heat insulating materials, refractory materials, and packing materials. In recent years, the inorganic fiber molded body has also been used as a holding material for an exhaust gas purification device of an automobile (hereinafter, also referred to as a "holding material").

Patent Literature 1 discloses a holding seal material disposed between a catalyst carrier and a shell covering an outside of the catalyst carrier in a catalytic converter for exhaust gas purification. In this holding seal material, a binder such as an organic binder is attached to a matlike material in which the inorganic fiber is arranged in a mat shape.

In the production of an exhaust gas purification device for an automobile, it is known that an assembly in which a holding material is wound around a catalyst carrier (hereinafter, also referred to as an "assembly") is disposed in a casing by press-fitting.

Citation List

Patent Literature

Patent Literature 1: JP 4042305 B

Summary of Invention

Technical Problem

In the holding seal material described in Patent Literature 1, the organic binder is dissolved at the time of initial combustion. At this time, the organic binder functions as a lubricant, and thus the surface pressure of the holding seal material may decrease. Therefore, in the holding seal material described in Patent Literature 1, the catalyst carrier may fall off at the time of initial combustion.

It is also known that the holding material is deformed when the assembly is press-fitted into the casing. When the deformation amount becomes large, the effective area of the holding material contributing to the force for holding the catalyst carrier decreases. As a result, the catalyst carrier may fall off.

Further, it is known that when the holding material is used for a long period of time, the surface pressure of the holding material contributing to the force for holding the catalyst carrier is reduced. Therefore, the catalyst carrier may fall off after long-term use.

In view of the above, an object of the present invention is to provide a holding material for an exhaust gas purification device and an exhaust gas purification device that can suppress the falling off of a catalyst carrier from a casing over the entire life cycle from immediately after the start of use to after long-term use. Another object of the present invention will become apparent from the description of the present specification.

Solution to Problem

The present disclosure encompasses, for example, the subject matter described below.

Aspect 1

A holding material for an exhaust gas purification device, the holding material containing:

an inorganic fiber molded body formed of an inorganic fiber, the holding material not containing a binder, wherein the inorganic fiber molded body has a needle mark extending in a thickness direction, and a warp yarn made of the inorganic fiber extending in the thickness direction is present in the needle mark;
a needle mark density is 8.0 to 18.0 marks/cm$^2$;

the number of effective warp yarns is 2.8 to 6.0 yarns/cm$^2$; and
each of the effective warp yarns represents a warp yarn having a diameter of 100 μm or more and a protrusion length of 2 mm or more among all warp yarns protruding from one peeled surface and another peeled surface in a range of 50 mm × 50 mm when a peeling method described below is performed:
Peeling method
a test piece having a width of 50 mm and a length of 150 mm is punched out from the inorganic fiber molded body; a cut having a depth of 30 mm is then made at a mid-thickness portion of one end surface of the test piece, both ends of the test piece formed by the cut are supported by a gripping jig, and then the test piece is set in a tensile tester; and both ends of the test piece are pulled in opposite thickness directions at a speed of 500 mm/min to be split into two.

Aspect 2

The holding material for an exhaust gas purification device according to Aspect 1, wherein
a total volume of the effective warp yarns is 6.5 to 10.0 mm$^3$/cm$^2$.

Aspect 3

The holding material for an exhaust gas purification device according to Aspect 1 or 2, wherein a basis weight is 1000 to 2000 g/m$^2$.

Aspect 4

The holding material for an exhaust gas purification device according to any one of Aspects 1 to 3, wherein an average volume per effective warp yarn is 1.5 to 4.0 mm$^3$/yarn.

Aspect 5

The holding material for an exhaust gas purification device according to any one of Aspects 1 to 4, wherein a residual surface pressure after a high-temperature cycle is 30 kPa or more.

Aspect 6

An exhaust gas purification device including:

a catalyst carrier;
a casing that covers an outside of the catalyst carrier; and
the holding material for an exhaust gas purification device described in any one of Aspects 1 to 5 disposed between the catalyst carrier and the casing.

Advantageous Effects of Invention

According to the present disclosure, there are provided a holding material for an exhaust gas purification device and an exhaust gas purification device that can suppress falling off of a catalyst carrier from a casing over the entire life cycle from immediately after the start of use to after long-term use.

Brief Description of Drawings

FIGS. 1(A) to 1(D) are explanatory views illustrating respective steps of press-fitting a catalyst carrier wound with a holding material into a casing.
FIG. 2 is an explanatory view of a test piece having a cut.
FIG. 3 is an explanatory view of a peeling method.
FIG. 4(A) is a partial schematic cross-sectional view illustrating a force applied to a holding material when the assembly of FIG. 1 is press-fitted into a casing. FIG. 4(B) is a partial schematic cross-sectional view illustrating a state of deformation of the holding material when the assembly having the holding material with a small number of effective warp yarns is press-fitted into the casing. FIG. 4(C) is a partial schematic cross-sectional view illustrating a state of deformation of the holding material when the assembly having the holding material with a large number of effective

warp yarns is press-fitted into the casing.

FIG. 5(A) is a partial side sectional view of an assembly in a state before press-fitting. FIG. 5(B) is a partial side sectional view of the assembly in a state where a holding material 1 is deformed with respect to a catalyst carrier 2 by press-fitting.

## Description of Embodiments

In the present specification, nouns without numerical qualification are intended to include both singular and plural forms unless otherwise expressly stated herein or clearly contradicted by the context.

In the present specification, the term "comprise" is a concept including "consist essentially of" and "consist of".

In the numerical ranges described in stages in the present specification, the upper limit value or the lower limit value of a numerical range of a certain stage can be optionally combined with the upper limit value or the lower limit value of a numerical range of another stage. In a numerical range described in the present specification, the upper limit value or the lower limit value of the numerical range may be replaced with a value illustrated in Examples or a value that can be uniquely derived from Examples. Further, in the present specification, numerical values connected by "to" mean a numerical value range including the numerical values before and after "to" as a lower limit value and an upper limit value.

Embodiments encompassed by the present disclosure will be further described below. The embodiments described below are merely examples of typical embodiments of the present disclosure, and the scope of the invention is not limited thereby.

## Holding Material for Exhaust Gas Purification Device

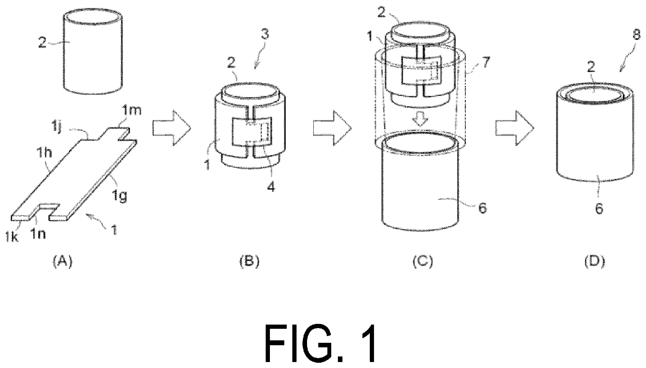

As illustrated in FIGS. 1(A) to 1(D), the holding material for an exhaust gas purification device 1 (hereinafter also referred to as "holding material 1") of the present disclosure is housed in a metal-made casing 6 in a state of an assembly 3 in which the holding material 1 is wound around a catalyst carrier 2. The holding material 1 is disposed between the catalyst carrier 2 and the casing 6. The holding material 1 holds the catalyst carrier 2 as a cushion material of the catalyst carrier 2. The holding material 1 is produced by performing punching or the like on the inorganic fiber molded body of the present disclosure. As illustrated in FIG. 1(A), the holding material 1 has long sides 1g and 1h that are substantially linear and have substantially the same length, and short sides 1j and 1k that connect the ends of the long sides 1g and 1h, respectively. The short side 1j has straight portions on both sides, and a protrusion 1m sandwiched between the straight portions, protruding outward from the straight portions, and defined by three substantially straight sides. The short side 1k has straight portions on both sides, and a recess 1n defined by three substantially straight sides, which is sandwiched between the straight portions and protrudes inward from the straight portions.

In the present disclosure, the characteristics and the like of the holding material 1 are the same as the characteristics and the like of the inorganic fiber molded body. Therefore, hereinafter, when the characteristics of the holding material 1 are described, the characteristics of the inorganic fiber molded body may be used.

The holding material 1 for an exhaust gas purification device of the present disclosure includes an inorganic fiber molded body composed of inorganic fibers and does not contain a binder. The inorganic fiber molded body has a needle mark extending in a thickness direction, and a warp yarn made of the inorganic fiber extending in the thickness direction is present in the needle mark,

a needle mark density is 8.0 to 18.0 marks/cm$^2$

the number of effective warp yarns is 2.8 to 6.0 yarns/cm$^2$, and

each of the effective warp yarns represents a warp yarn having a diameter of 100 $\mu$m or more and a protrusion length of 2 mm or more among all warp yarns protruding from one peeled surface and another peeled surface in a range of 50 mm $\times$ 50 mm when the following peeling method is performed.

### Peeling Method

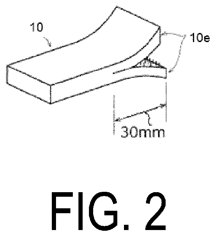

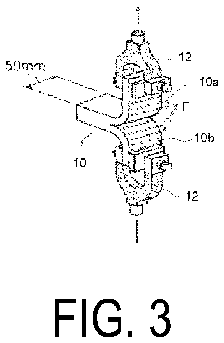

A test piece 10 having a width of 50 mm and a length of 150 mm is punched out from the inorganic fiber molded body. Subsequently, as illustrated in FIG. 2, a cut having a depth of 30 mm is made at the mid-thickness portion of one end surface 10e of the test piece 1. Next, as illustrated in FIG. 3, both ends of the test piece formed by the incision are supported by gripping jigs 12, and then the test piece is set in a tensile tester. Both ends are pulled in the opposite thickness directions at a speed of 500 mm/min to be split into two.

## Inorganic Fiber Molded Body

In one embodiment of the present disclosure, the inorganic fiber molded body is obtained by firing a molded body

of an inorganic fiber precursor. In one embodiment of the present disclosure, the molded body of the inorganic fiber precursor is obtained by subjecting a laminated sheet to a needling processing. In one embodiment of the present disclosure, the laminated sheet is obtained by laminating thin layer sheets. In one embodiment of the present disclosure, the thin layer sheet is a collection of inorganic fiber precursors. In one embodiment of the present disclosure, the inorganic fiber precursor is obtained by spinning a spinning liquid by a blowing method. The inorganic fiber molded body is in the form of a mat having a predetermined thickness. The surface perpendicular to the thickness direction of the inorganic fiber molded body may be hereinafter referred to as a mat surface. The side surface (surface in the thickness direction) perpendicular to the mat surface of the inorganic fiber molded body may be referred to as an end surface.

Inorganic Fiber

The inorganic fibers constituting the inorganic fiber molded body of the present disclosure are not particularly limited, and examples thereof include single or composite fibers of silica, alumina/silica, zirconia containing silica or alumina/silica, spinel, titania, and the like, and alumina/silica-based fibers are particularly preferable, and crystalline alumina/silica-based fibers are particularly preferable. The alumina/silica compositional ratio of the alumina/silica-based fibers is preferably in a range of 60 to 95/40 to 5, more preferably in a range of 70 to 84/30 to 16, and particularly preferably in a range of 70 to 76/30 to 24 in terms of weight ratio.

The inorganic fibers are preferably short fibers. The fiber length of the inorganic fibers is not particularly limited, but is preferably 1mm or more and 1000 mm or less, and more preferably 30 mm or more and 800 mm or less. The average fiber diameter of the inorganic fibers is preferably 3 to 10 $\mu$m, and more preferably 5 to 8 $\mu$m. When the average fiber diameter of the inorganic fibers is preferably 8 $\mu$m or less, the inorganic fiber molded body has an appropriate repulsive force, which is preferable. When the average fiber diameter of the inorganic fibers is 5 $\mu$m or more, the amount of dust floating in the air can be suppressed, which is preferable.

Basis Weight and Thickness of Inorganic Fiber Molded Body

The basis weight (mass per unit area) of the inorganic fiber molded body of the present disclosure is appropriately determined depending on the application, and is preferably 1000 g/m$^2$ or more, more preferably 1200 g/m$^2$ or more. The basis weight of the inorganic fiber molded body of the present disclosure is preferably 1000 to 2000 g/m$^2$, more preferably 1000 to 1800 g/m$^2$, and more preferably 1200 to 1800 g/m$^2$, from the viewpoint of obtaining the holding material 1 capable of suppressing the falling off of the catalyst carrier 2 from the casing 6 over the entire life cycle.

The thickness of the inorganic fiber molded body of the present disclosure is preferably 3 mm or more, more preferably 5 mm or more. The thickness of the inorganic fiber molded body of the present disclosure is preferably 40 mm or less, more preferably 30 mm or less, further preferably 25 mm or less, particularly preferably 23 mm or less.

For example, FIGS. 1(A) to 1(D) illustrate steps of press-fitting the assembly 3 into the casing 6. FIG. 1(A) illustrates a step of providing the holding material 1 and the catalyst carrier 2. FIG. 1(B) illustrates a step of providing the assembly 3 in which the holding material 1 is wound around the catalyst carrier 2 and the holding material 1 is fixed with a fixing tape 4 or the like. FIG. 1(C) illustrates a step of press-fitting the assembly 3 into the casing 6 using a jig 7. FIG. 1(D) illustrates a step of completing an exhaust gas purification device 8 including the catalyst carrier 2, the casing 6 covering an outside of the catalyst carrier 2, and the holding material 1 disposed between the catalyst carrier 2 and the casing 6.

As the basis weight or the thickness of the inorganic fiber molded body of the present disclosure increases, the deformation amount of the holding material 1 tends to increase when the assembly 3 is press-fitted. Meanwhile, in order to avoid the falling off of the catalyst carrier 2, it is preferable that the deformation amount of the holding material 1 is small when the assembly 3 is press-fitted into the casing 6.

The basis weight and thickness of the inorganic fiber molded body can be set to the above ranges by adjusting the amount of fibers per unit area when an aggregate of inorganic fiber precursors (hereinafter, also referred to as "thin layer sheet") constituting the inorganic fiber molded body is laminated by a folding device. The inorganic fiber molded body of the present disclosure may have a single configuration or a configuration in which a plurality of inorganic fiber molded bodies are bonded, but the inorganic fiber molded body preferably has a single configuration from the viewpoint of handling properties and peel strength at the bonding interface.

Needle Mark Density

Method for Measuring Needle Mark Density

In one embodiment of the present disclosure, the needle mark density of the inorganic fiber molded body means the number of needle marks per unit area (1 cm$^2$) of the mat surface of the inorganic fiber molded body (obtained by firing the molded body of the inorganic fiber precursor).

When visible light is applied to the mat surface of the inorganic fiber molded body subjected to the above-described peeling method, the transmitted light is observed as a light spot on the peeled surface because the amount of transmitted light in the needle mark is larger than the amount of transmitted light in the region other than the needle mark. The number of light spots and the number of warp yarns due to the transmission to the peeled surface are counted, and the sum of the number of light spots and the number of warp yarns is divided by the area to determine the needle mark density.

That is, visible light is applied to one surface of the inorganic fiber molded body, the number of light spots and the number of warp yarns due to transmission to the peeled surface are counted, and the needle mark density is determined by dividing the sum of the number of light spots and the number of warp yarns by the area.

Preferable Range of Needle Mark Density

In the present disclosure, the needle mark density, which is the number of needle marks per unit area (1 $cm^2$) of the mat surface of the inorganic fiber molded body, is 8.0 to 18.0 marks/$cm^2$ as a mean value of the entire mat surface. With regard to the needle mark density, there is a trade-off relationship between the likelihood of deformation of the holding material 1 during press-fitting and the magnitude of the residual surface pressure of the holding material 1 after a high-temperature cycle. When the needle mark density is less than 8.0 marks/$cm^2$, the deformation of the holding material 1 at the time of press-fitting becomes large. When the needle mark density exceeds 18.0 marks/$cm^2$, the residual surface pressure of the holding material 1 after a high-temperature cycle decreases. Therefore, the inorganic fiber molded body satisfying a needle mark density of 8.0 to 18.0 marks/$cm^2$ can achieve both the difficulty in deformation during the press-fitting of the holding material 1 and the high residual surface pressure after the high-temperature cycle. Since both the difficulty in deformation of the holding material 1 during press-fitting and the high residual surface pressure after the high-temperature cycle contribute to the suppression of the falling off of the catalyst carrier 2 from the casing 6, the falling off of the catalyst carrier 2 from the casing 6 can be suppressed over the entire life cycle by satisfying the needle mark density of 8.0 to 18.0 marks/$cm^2$.

Warp Yarns

The inorganic fiber molded body of the present disclosure has needle marks formed by the needling processing. When the needling processing is performed to pierce and remove the barbed needles through the laminated sheet, at least some of the fibers are extended substantially in the thickness direction by the needles at the locations where the needles are pierced and removed. Bundles of inorganic fibers formed in the substantially thickness direction, which are present inside the inorganic fiber molded body formed by the needling processing, are referred to as warp yarns.

Effective Warp Yarn

In the present disclosure, when the peeling method is performed, among all the warp yarns F (FIG. 3) protruding from both the peeled surfaces (one peeled surface 10a and the other peeled surface 10b) per unit area (50 mm $\times$ 50 mm), the warp yarn F having a diameter of 100 $\mu$m or more and a protrusion length of 2 mm or more is defined as an effective warp yarn. The unit area (50 mm $\times$ 50 mm) for measuring each numerical value relating to the warp yarn F is any region of the test piece 10 (150 mm $\times$ 50 mm), excluding the portion where the cut having a depth of 30 mm is made at the mid-thickness portion.

The effective warp yarn has a diameter and a length which act to make the holding material 1 less likely to be deformed when the holding material 1 is press-fitted and to adjust the residual surface pressure after a high-temperature cycle.

Number of Effective Warp Yarns

In the inorganic fiber molded body of the present disclosure, the number of the effective warp yarns is 2.8 to 6.0 yarns/$cm^2$.

When the number of the effective warp yarns is less than 2.8 yarns/$cm^2$, the holding material 1 is likely to be deformed when press-fitted. When the number of the effective warp yarns exceeds 6.0 yarns/$cm^2$, the residual surface pressure of the holding material 1 after a high-temperature cycle is reduced. In one embodiment of the present disclosure, the number of effective warp yarns is 2.8 to 5.0 yarns/$cm^2$. When the number is in such a range, both the difficulty in deformation of the holding material 1 during press-fitting and the high residual surface pressure after a high-temperature cycle can be achieved.

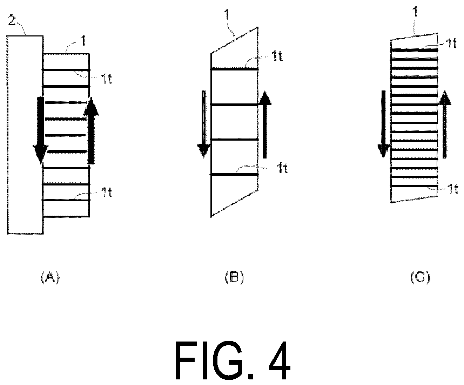

Here, referring to FIG. 4(A), similarly to FIGS. 1(B) to 1(D), the holding material 1 formed of the inorganic fiber molded body is wound around the catalyst carrier 2, and a plurality of warp yarns extend in the inorganic fiber molded body of the holding material 1. When the assembly 3 is press-fitted into the casing (reference numeral 6 in FIG. 1(C)), a shear

stress indicated by an arrow in FIG. 4(A) is applied to the holding material 1. As illustrated in FIG. 4(B), when the inorganic fiber molded body having a small number of the effective warp yarns 1t is used, the holding material 1 is weak against the shear stress, and the holding material 1 is easily deformed at the time of press-fitting. However, when the number of the effective warp yarns 1t is small, the binding force for maintaining the thickness of the inorganic fiber molded body is weak, and therefore, the surface pressure applied from the holding material 1 to the catalyst carrier 2 is relatively high. Meanwhile, as illustrated in FIG. 4 (C), when an inorganic fiber molded body having a large number of effective warp yarns 1t is used, the holding material 1 is resistant to shear stress, and the holding material 1 is not easily deformed during press-fitting. However, when the number of the effective warp yarns 1t is large, the binding force for maintaining the thickness of the inorganic fiber molded body is strong, and therefore, the surface pressure applied from the holding material 1 to the catalyst carrier 2 is relatively low. The holding material 1 of the present disclosure achieves both trade-off between strength against shear stress (resistance to deformation during press-fitting) and the level of residual surface pressure after a high-temperature cycle applied to the catalyst carrier 2, thereby suppressing the catalyst carrier 2 from falling off from the casing 6 over the entire life cycle.

Total Volume V of Effective Warp Yarns

After the above peeling method is carried out, the number (number of yarns) N, the diameter (thicknesses) D, and the length (protrusion lengths from the peeled surface 10a or 10b) L of the effective warp yarns protruding from the peeled surfaces 10a and 10b are measured with a digital microscope. The measurement magnification of the digital microscope is preferably 10 to 20 times. The length L is the length of the portion protruding from the peeled surface 10a or 10b, and the portion having a diameter of 100 $\mu$m or more is measured. The diameter D is a value measured at the substantially middle portion in the length direction of the portion protruding from the peeled surface 10a or 10b.

The total volume V of the effective warp yarns in the range of 50 mm $\times$ 50 mm is the sum of the volumes ($\pi D^2 \cdot L/4$) of the N effective warp yarns.

In the inorganic fiber molded body of the present disclosure, the total volume (sum of volumes) V of the effective warp yarns is 6.5 to 10.0 $mm^3/cm^2$. This range of the total volume is preferable from the viewpoint of obtaining the holding material 1 that suppresses deformation during press-fitting and has a high residual surface pressure after a high-temperature cycle. In one embodiment of the present disclosure, the total volume (sum of volumes) V of the effective warp yarns is from 7.0 to 10.0 $mm^3/cm^2$. When the total volume is in such a range, both the difficulty in deformation of the holding material 1 during press-fitting and the high residual surface pressure after a high-temperature cycle can be achieved.

When the number of the effective warp yarns is constant, the smaller the total volume V of the effective warp yarns of the inorganic fiber molded body, the thinner the thickness of the effective warp yarns, and the inorganic fiber molded body is weak against shear stress. Therefore, the holding material 1 is easily deformed at the time of press-fitting, but the surface pressure applied from the holding material 1 is relatively high. Meanwhile, the larger the total volume V of the effective warp yarns of the inorganic fiber molded body, the larger the thickness of the effective warp yarns, and the inorganic fiber molded body is strong against shear stress. Therefore, the holding material 1 is less likely to be deformed during press-fitting, but the surface pressure applied from the holding material 1 is relatively low. As described above, the total volume V of the effective warp yarns of the inorganic fiber molded body of the present disclosure also contributes to both the strength against the shear stress of the holding material 1 (the difficulty of deformation during press-fitting) and the level of the residual surface pressure after the high-temperature cycle applied to the catalyst carrier 2.

Multi-Needle Rate

In the present disclosure, further performing the needling processing on a place where the needle mark is once formed is referred to as a multiple needling process, and the needle mark formed thereby is referred to as a multi-needle mark. The multi-needle rate (i.e., the number of multi-needle marks) can be adjusted by, for example, changing the conveyance speed of the laminated sheet in the needling processing step. The multiple needling process is an example of a means for thickening the warp yarns. The multi-needle rate can be determined by Equation 1 described below.
[Math. 1]

$$\text{Multi-needle rate (\%)} = (1 - (\text{measured needle mark density}/\text{theoretical needle mark density})) * 100 \qquad \text{Equation 1}$$

The measured needle mark density is a measured value obtained by the above-described needle mark density measurement method. The theoretical needle mark density is a theoretical value of the needle mark density calculated when it is assumed that there is no multi-needle mark.

In the multi-needle marks, the warp yarns tend to be thicker than in the single needle mark. Therefore, the volume of the warp yarns in the multi-needle marks tends to increase. That is, by forming the multi-needle marks, the total volume V

of the effective warp yarns can be increased without increasing the needle mark density. As a result, as compared to the case of increasing the needle mark density, it is possible to form a stronger warp yarn (i.e., a stronger binding force for maintaining the thickness of the inorganic fiber molded body) without excessively decreasing the residual surface pressure after the high-temperature cycle. As described above, the multiple needling process also contributes to both the strength against the shear stress of the holding material 1 (the difficulty of deformation during press-fitting) and the level of the residual surface pressure after the high-temperature cycle applied to the catalyst carrier 2.

Average Volume of Effective Warp Yarns per Needle Mark

The number n of needle marks in the range of 50 mm $\times$ 50 mm is measured by the above-described measurement method. The total volume V obtained by performing the peeling method is divided by n to determine the average volume of the effective warp yarns per needle mark (hereinafter, may be referred to as "average volume of the effective warp yarns per needle mark").

That is, the average volume of the effective warp yarns per needle mark is V/n, which is obtained by dividing the sum (total volume) V of the volumes of all the effective warp yarns present on both the peeled surfaces (one peeled surface 1a and the other peeled surface lb) per unit area (50 mm $\times$ 50 mm) by the number n of needle marks per unit area when the peeling method is performed. As the average volume V/n of the effective warp yarns per needle mark is larger, the needling processing is more effectively performed, and stronger effective warp yarns (i.e., having a stronger binding force for maintaining the thickness of the inorganic fiber molded body) are formed. The average volume of the effective warp yarns per needle mark of the inorganic fiber molded body of the present disclosure also contributes to both the strength against the shear stress of the holding material 1 (the difficulty of deformation during press-fitting) and the level of the residual surface pressure after the high-temperature cycle applied to the catalyst carrier 2.

The average volume of the effective warp yarns per needle mark of the inorganic fiber molded body is preferably 0.40 $mm^3$ or more, and more preferably 0.45 $mm^3$ or more. The average volume of the effective warp yarns per needle mark of the inorganic fiber molded body is preferably 1.0 $mm^3$ or less, more preferably 0.95 $mm^3$ or less.

Average Volume per Effective Warp Yarn

The total volume V is divided by the number N of the effective warp yarns to determine the average volume per effective warp yarn (hereinafter, may be referred to as "average volume per effective warp yarn").

That is, the average volume per effective warp yarn is V/N obtained by dividing the sum (total volume) V of the volumes of all the effective warp yarns present on both the peeled surfaces (one peeled surface 1a and the other peeled surface 1b) per unit area (50 mm $\times$ 50 mm) by the number N of the effective warp yarns in the unit area when the peeling method is performed. As the average volume V/N per effective warp yarn in the inorganic fiber molded body is larger, the needling processing is more effectively performed, and a stronger effective warp yarn (i.e., a stronger binding force for maintaining the thickness of the inorganic fiber molded body) is formed. The average volume per effective warp yarn of the inorganic fiber molded body of the present disclosure also contributes to both the strength against the shear stress of the holding material 1 (the difficulty of deformation during press-fitting) and the level of the residual surface pressure after the high-temperature cycle applied to the catalyst carrier 2.

The average volume per effective warp yarn of the inorganic fiber molded body is preferably 1.0 $mm^3$ or more, and more preferably 1.5 $mm^3$ or more. The average volume of the effective warp yarns per effective warp yarn of the inorganic fiber molded body is preferably 4.0 $mm^3$ or less, and more preferably 3.5 $mm^3$ or less.

Residual Surface Pressure after High-Temperature Cycle

In the inorganic fiber molded body of the present disclosure, the surface pressure after the high-temperature cycle can be determined by the following measurement test. After the inorganic fiber molded body is compressed at GBD (bulk density) = 0.30 $g/cm^3$ for 30 minutes, the upper and lower plates are heated to 600°C, and opening and compression are repeated 1000 times with GBD = 0.27 $g/cm^3$ at the time of opening and GBD = 0.30 $g/cm^3$ at the time of compression. At this time, the surface pressure value at the first opening time (GBD = 0.27 $g/cm^3$) and the surface pressure value at the 1000th opening time (GBD = 0.27 $g/cm^3$) are measured. At this time, the surface pressure value (kPa) at the time of the 1000th opening is defined as the residual surface pressure after the high-temperature cycle (also referred to as residual surface pressure).

The inorganic fiber molded body of the present disclosure can maintain excellent holding force of the catalyst carrier over a long period of time as the residual surface pressure after the high-temperature cycle is higher. Therefore, in the inorganic fiber molded body of the present disclosure, the residual surface pressure after the high-temperature cycle is preferably 30 kPa or more, more preferably 33 kPa or more, and particularly preferably 35 kPa or more. Further, the higher the residual surface pressure after the high-temperature cycle, the more advantageous it is in that the holding force can be

maintained for a long period of time, but in general, the deformation amount at the time of press-fitting tends to increase. In the inorganic fiber molded body of the present disclosure, the residual surface pressure after the high-temperature cycle is preferably 50 kPa or less, more preferably 45 kPa or less, and particularly preferably 40 kPa or less, from the viewpoint of suppressing the deformation amount during the press-fitting.

Method for Producing Holding Material

The holding material 1 of the present disclosure can be produced by a method including a spinning step, a needling processing step, a firing step, and a punching step, as described below. However, the holding material 1 of the present disclosure may be produced by a method other than this.

Hereinafter, an example of a method for producing the holding material will be described by exemplifying a method for producing an alumina/silica-based fiber molded body, but the holding material of the present disclosure is not limited to a case where the alumina/silica-based fiber molded body is provided, and as described above, a molded body formed of silica, zirconia, spinel, titania, or a composite fiber thereof may be provided.

Spinning Step

In the spinning step, a spinning liquid containing basic aluminum chloride, a silicon compound, an organic polymer as a thickener, and water is spun by a blowing method to form a laminated sheet of an alumina/silica-based fiber precursor.

Preparation of Spinning Liquid

Basic aluminum chloride; $Al(OH)_{3-x}Cl_x$ can be prepared, for example, by dissolving metallic aluminum in hydrochloric acid or an aqueous aluminum chloride solution. The value of x in the above chemical formula is usually 0.45 to 0.54, preferably 0.5 to 0.53. As the silicon compound, silica sol is preferably used, but a water-soluble silicon compound such as tetraethyl silicate or a water-soluble siloxane derivative can also be used.

The spinning liquid preferably has a ratio of aluminum derived from the basic aluminum chloride to silicon derived from the silicon compound of usually 99:1 to 65:35, preferably 99:1 to 70:30 in terms of a weight ratio of $Al_2O_3$ to $SiO_2$, and an aluminum concentration of 170 to 210 g/L.

When the amount of the silicon compound in the spinning liquid is less than the above range, alumina constituting the short fibers is easily converted into $\alpha$-alumina, and the short fibers are easily embrittled due to coarsening of alumina particles. Meanwhile, when the amount of the silicon compound in the spinning liquid is larger than the above range, the amount of silica ($SiO_2$) produced together with mullite ($3Al_2O_3 \cdot 2SiO_2$) increases, and the heat resistance is likely to decrease.

When the aluminum concentration in the spinning liquid is 170 to 210 g/L, the spinning liquid also has an appropriate viscosity, and short fibers having a predetermined average fiber diameter and a sharp fiber diameter distribution are obtained. The concentration of aluminum in the spinning liquid is preferably 180 to 200 g/L.

The spinning liquid is prepared by adding the silicon compound and the organic polymer in amounts to give the $Al_2O_3$:$SiO_2$ ratio to an aqueous solution of basic aluminum chloride and concentrating the solution so that the aluminum concentration falls within the above range.

Blowing

The spinning, i.e., the fiberization of the spinning liquid is usually carried out by a blowing method in which the spinning liquid is supplied into a high-speed spinning air flow, whereby an alumina/silica-based fiber precursor is produced. The structure of the spinning nozzle used in the above spinning is not particularly limited, but a structure in which the air flow blown out from the air nozzle and the spinning liquid flow extruded from the spinning liquid supply nozzle are parallel flows, and the parallel flow of air is sufficiently rectified and brought into contact with the spinning liquid, as described in JP 2602460 B, is preferable.

In the spinning, it is preferable that a sufficiently drawn fiber is first formed from the spinning liquid under conditions in which evaporation of water and decomposition of the spinning liquid are suppressed, and then the fiber is rapidly dried. For this purpose, it is preferable to change the atmosphere from a state of suppressing evaporation of water to a state of promoting evaporation of water in the process of forming fibers from the spinning liquid and reaching the fiber collector.

The alumina/silica-based fiber precursor is collected by a fiber collector. The fiber collector has a structure including an endless belt made of a metal mesh installed so as to be substantially perpendicular to the spinning air flow, and the spinning air flow containing the alumina/silica-based fiber precursor is caused to collide with the endless belt while the

endless belt is rotated. Thus, a continuous thin layer sheet of the alumina/silica-based fiber precursor is produced.

The basis weight of the thin layer sheet is preferably 10 to 200 g/m$^2$, particularly preferably about 30 to 100 g/m$^2$, but is not limited thereto.

The above thin layer sheet can be further laminated. Specifically, for example, the thin layer sheet is continuously pulled out and fed to a folding device, and is folded to a predetermined width and stacked. At this time, the thin layer sheet is continuously moved in a direction perpendicular to the folding direction. In this manner, a laminated sheet can be produced. By laminating the thin layer sheets in this manner, the basis weight (weight per unit area) of the laminated sheet becomes uniform over the entire sheet. As the folding device, a device described in JP 2000-80547 A can be used.

The laminated sheet is formed by laminating preferably 5 or more, more preferably 8 or more, and particularly preferably 10 to 80 thin layer sheets. However, the number of laminated layers is not limited thereto.

Needling processing Step

The laminated sheet obtained by the spinning step is subjected to a needling processing in which needles having barbs are pierced through the laminated sheet. Thus, a molded body of the alumina/silica-based fiber precursor is obtained. The needling processing may be performed from only one surface or both surfaces. Preferably, it is applied from both sides. In the needling processing step, the multi-needle rate is also adjusted by changing the conveyance speed of the laminated sheet or the like (multiple needling process).

The needle is preferably pierced in a direction perpendicular to the sheet surface of the laminated sheet (a surface perpendicular to the thickness direction of the laminated sheet). The needle is inserted deeper than the center in the thickness direction of the laminated sheet. The needle may be inserted so as to penetrate the laminated sheet in the thickness direction.

When the needling processing is performed in this manner, at least some of the fibers are extended substantially in the thickness direction by the needles at the locations where the needles are inserted and removed. Thus, needle marks are formed on the surface of the molded body of the alumina/silica-based fiber precursor. In the inside of the molded body of the alumina/silica-based fiber precursor, a bundle of the alumina/silica-based fibers extending substantially in the thickness direction is referred to as a warp yarn. In the multi-needle marks, fibers extended in the substantially thickness direction by another needle are added to the already formed warp yarns, and thicker warp yarns are formed.

The needling processing is performed to adjust the residual surface pressure after a high-temperature cycle of the alumina/silica-based fiber molded body and the suppression of deformation at the time of press-fitting by forming warp yarns.

The needle marks may penetrate the molded body of the alumina/silica-based fiber precursor, or may penetrate from one mat surface and extend so as not to reach the other mat surface.

Firing Step

The holding material 1 of the present disclosure is preferably an alumina/silica-based fiber molded body obtained by firing a molded body of an alumina/silica-based fiber precursor. The firing after the needling processing is performed at a temperature of usually 900°C or higher, preferably 1000 to 1300°C. When the firing temperature is 900°C or higher, crystallization sufficiently proceeds, and an alumina/silica-based fiber having excellent strength is obtained, which is preferable. When the firing temperature is 1300°C or lower, the grain growth of the crystal of the fiber does not excessively proceed, and an alumina/silica-based fiber having an appropriate strength can be obtained, which is preferable.

Punching Step

After the firing step, the alumina/silica-based fiber molded body is subjected to punching or the like, whereby the holding material 1 is produced.

Application of Holding Material

The application of the holding material 1 of the present disclosure is not particularly limited, and the holding material 1 is widely used for vehicles/machines and the like in which a catalyst carrier is disposed in a metal-made casing, such as automobiles and construction vehicles. In particular, the holding material 1 is useful as a holding material for an exhaust gas purification device mounted on an automobile.

Since the inorganic fiber molded body constituting the holding material 1 of the present disclosure does not contain a binder, the catalyst carrier is less likely to fall off from the holding material 1 at the time of initial combustion. Additionally, it is possible to eliminate an offensive smell due to combustion of the organic binder, a sensor failure due to a binder component at the time of combustion, and the like. Examples of the binder include an inorganic binder and an

organic binder. Examples of the inorganic binder include silica sol and/or alumina sol. Examples of the organic binder include synthetic rubbers such as acrylic rubber and nitrile rubber; water-soluble polymer compounds such as carboxymethyl cellulose and polyvinyl alcohol; thermoplastic resins; and thermosetting resins.

Exhaust Gas Purification Device

The exhaust gas purification device includes a catalyst carrier, a metal-made casing covering an outside of the catalyst carrier, and a holding material disposed between the catalyst carrier and the casing. The exhaust gas purification device of the present disclosure includes, as the holding material, the holding material for an exhaust gas purification device 1 of the present disclosure. In the exhaust gas purification device of the present disclosure, the deformation amount of the holding material 1 is small during press-fitting, and the residual surface pressure after a high-temperature cycle is high, and therefore the holding performance of the catalyst carrier after assembly is also good over the entire life cycle.

The configuration of the exhaust gas purification device itself is not particularly limited, and the present disclosure can be applied to various exhaust gas purification devices including a catalyst carrier, a casing, and a holding material for the catalyst carrier.

Examples

The following Examples are intended for illustration only and are not intended to limit the technical scope of the present invention in any way.

The methods for measuring and evaluating various physical properties and characteristics of the inorganic fiber molded bodies produced in Examples and Comparative Examples are as follows.

Peeling Method

A test piece having a width of 50 mm and a length of 150 mm is punched out from the inorganic fiber molded body, and a cut having a depth of 30 mm is made at the mid-thickness portion of one end surface 10e of the test piece 10. As illustrated in FIG. 2, both ends formed by the incision were gripped by gripping jigs 12, respectively, and then set in a tensile tester, and pulled in opposite directions perpendicular to the mat surface at a speed of 500 mm/min to split the test piece 10 into two.

Method for Measuring Needle Mark Density

In the present disclosure, when the peeling method was carried out, the inorganic fiber molded body was cut into a square of 50 mm × 50 mm to prepare a sample, and visible rays were applied to one surface of the inorganic fiber molded body, and the number of all needle marks per unit area was counted by counting the number of light spots and warp yarns due to transmission to the peeled surface. The number of needle marks per unit area (1 $cm^2$) of the mat surface of the inorganic fiber molded body after firing was defined as the needle mark density.

Multi-Needle Rate

The multi-needle rate was determined by Equation 1 described above. Here, the measured needle mark density is a measured value obtained by the above-described method for measuring the needle mark density. The theoretical needle mark density is a theoretical value of the needle mark density calculated when it is assumed that there is no multi-needle mark.

Number of Effective Warp Yarns

In the present disclosure, when the peeling method is performed, among all the warp yarns F (FIG. 3) protruding from both the peeled surfaces (one peeled surface 10a and the other peeled surface 10b) per unit area (50 mm × 50 mm), the warp yarn having a diameter of 100 μm or more and a protrusion length of 2 mm or more is defined as an effective warp yarn, and the number thereof is counted. The unit area (50 mm × 50 mm) for measuring each numerical value relating to the warp yarns is any region of the test piece 10 (150 mm × 50 mm) except for a portion where a cut having a depth of 30 mm is made at the mid-thickness portion.

Total Volume V of Effective Warp Yarns

After the above peeling method was performed, among all the warp yarns F (FIG. 3) protruding from both the

peeled surfaces (one peeled surface 10a and the other peeled surface 10b) per unit area (50 mm × 50 mm), the warp yarns having a diameter of 100 μm or more and a protrusion length of 2 mm or more were defined as effective warp yarns in the range. The number, diameter (thickness), and length of the yarns were measured, and the total volume of the effective warp yarns was determined. The diameter, length, number, and the like of the effective warp yarns were measured by observing the peeled surface with a digital microscope (VHX-5000, available from Keyence Corporation) at 10x magnification).

Average Volume of Effective Warp Yarns per Needle Mark

The average volume of the effective warp yarns per needle mark was determined as V/n by dividing the sum (total volume) V of the volumes of all the effective warp yarns present on both the peeled surfaces (one peeled surface and the other peeled surface) per unit area (50 mm × 50 mm) by the number n of needle marks per unit area when the above peeling method was performed.

Average Volume per Effective Warp Yarn

The total volume V was divided by the number N of the effective warp yarns to determine the average volume per effective warp yarn.

Amount of Organic Binder

The amount of the organic binder was determined from the ratio of the weight of the organic binder to the weight of the inorganic fiber molded body (the total weight of the inorganic fibers and the organic binder).

Hot Extraction Test

The sizes of the catalyst carrier and the SUS tube are selected so that the GBD of the inorganic fiber molded body after the press-fitting becomes 0.36 g/cm$^3$. An assembly obtained by winding the inorganic fiber molded body around the catalyst carrier is press-fitted into the SUS tube. While the catalyst carrier is pushed at a speed of 0.05 mm/min, the temperature of the catalyst carrier is raised at 10°C/min after 40 minutes. The average value of the extraction load at normal temperature and the minimum value of the extraction load during temperature rise from 30 minutes to 40 minutes after the start of the test were recorded, and the load reduction rate was calculated from Equation 2 described below. The extraction load is a value measured by a load cell.
[Math. 2]

Load reduction rate (%) = (1 - (lowest value of extraction load during temperature rise/average value of extraction load at normal temperature)) * 100 Equation 2

Normal Temperature Press-Fit Test

In the normal temperature press-fit test of GBD = 0.3, the sizes of the catalyst carrier and the SUS tube are selected so that the GBD of the inorganic fiber molded body after press-fit becomes 0.30 g/cm$^3$. When the inorganic fiber molded body is wound around the catalyst carrier, the inorganic fiber molded body is aligned with the lower end of the catalyst carrier. After winding, the distance from the upper end of the inorganic fiber molded body to the upper end of the catalyst carrier is measured at five points in the circumferential direction on each of the outer peripheral side (A) and the inner peripheral side (B) of the inorganic fiber molded body. In addition, the distance from the lower end of the inorganic fiber molded body to the lower end of the catalyst carrier is measured at five points in the circumferential direction on the inner peripheral side (C).

After the measurement, the catalyst carrier around which the inorganic fiber molded body is wound is press-fitted into the SUS tube using a jig. After completion of the press-fitting, the distance from the upper end of the inorganic fiber molded body to the upper end of the catalyst carrier is measured again at five points in the circumferential direction on each of the mat outer peripheral side (A') and the mat inner peripheral side (B'). In addition, the distance from the lower end of the inorganic fiber molded body to the lower end of the catalyst carrier is measured at five points on the inner peripheral side (C') of the inorganic fiber molded body.

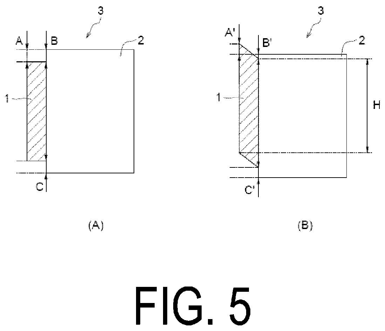

To describe this merely as an example, FIG. 5(A) is a partial schematic cross-sectional view of the assembly 3 before press-fitting in which the holding material 1 made of the inorganic fiber molded body is wound around the catalyst carrier 2, and FIG. 5(B) is a partial schematic cross-sectional view of the assembly 3 after completion of press-fitting.

The measurement results were evaluated using the following formulae.

$$\text{Deformation amount} = (B' - A') - (B - A)$$

$$\text{Elongation amount} = (B' - C') - (B - C)$$

$$\text{Total deformation amount} = \text{deformation amount} + \text{elongation amount}$$

Effective Area

The effective area is calculated by the effective height times the length of the holding material. In the example of FIG. 5(B), the effective height (reference character H in FIG. 5(B)) means the distance from the upper end of the inner peripheral side (the side in contact with the catalyst carrier 2) of the holding material 1 to the lower end of the outer peripheral side (the side in contact with the casing) of the holding material 1 after the assembly 3 is press-fitted into the casing. The length of the holding material 1 is the circumferential length of the inner circumferential surface of the holding material 1 in the assembled state.

Normal Temperature Press-Fit Test

$$GBD = 0.4$$

The above normal temperature press-fit test was performed at GBD = 0.4.

Method for Measuring Residual Surface Pressure

The residual surface pressure was determined by the following method.

After the inorganic fiber molded body was compressed at GBD (bulk density) = 0.30 for 30 minutes, the upper and lower plates were heated to 600°C, and opening and compression were repeated 1000 times with GBD = 0.27 at the time of opening and GBD = 0.30 at the time of compression. At this time, the surface pressure value at the first opening (GBD = 0.27) and the surface pressure value at the 1000th opening (GBD = 0.27) were measured.

The surface pressure value (kPa) at the time of the 1000th opening was defined as the residual surface pressure (surface pressure after the high-temperature cycle).

Example 1

To an aqueous solution of basic aluminum chloride (aluminum content 165 g/L, Al/Cl = 1.8 (atomic ratio)), silica sol was added so that the composition of the alumina fiber finally obtained was $Al_2O_3$:$SiO_2$ = 72:28 (weight ratio), and polyvinyl alcohol was further added, followed by concentration to prepare a spinning liquid having a viscosity of 70 poise (25°C.) and an alumina-silica content of about 35 wt.%.

The spinning liquid was spun by a blowing method. As the spinning nozzle, a spinning nozzle having the same structure as that described in FIG. 6 of JP 2602460 B was used. For collecting the fibers, there was used a fiber collector having a structure in which an endless belt made of a metal mesh was installed so as to be substantially perpendicular to the spinning air flow, and the spinning air flow containing the alumina/silica-based fiber precursor was caused to collide with the endless belt while rotating the endless belt. Thus, the alumina/silica-based fiber precursor was collected as a continuous sheet (thin layer sheet).

After a lubricant was applied to the thin layer sheet by spraying, the thin layer sheet was continuously pulled out and fed to a folding device. While the thin layer sheet was folded to a predetermined width and stacked, the thin layer sheet was continuously moved in a direction perpendicular to the folding direction, thereby forming a laminated sheet. As the folding device, a folding device having the same structure as that described in JP 2000-80547 A was used.

In the needling processing, the laminated sheet was punched by a needle punching machine so that the alumina/silica-based fiber molded body after firing had a needle mark density of 10.6 marks/cm$^2$ and a multi-needle rate of 58%. Thus, a molded body of an alumina/silica-based fiber precursor was produced.

Thereafter, the alumina/silica-based fiber precursor molded body was fired at 1200°C to produce an inorganic fiber molded body (alumina/silica-based fiber molded body) formed of crystalline alumina/silica-based fibers having a basis weight of 1200 g/m$^2$. The firing was carried out in a gas furnace at a temperature rising rate of 5°C/min up to 1200°C, and after holding at 1200°C for 30 minutes, natural cooling was carried out. The inorganic fiber molded body is not

impregnated with a binder.

The compositional ratio of the crystalline alumina/silica-based fibers was alumina/silica = 72/28 (weight ratio), and the average fiber diameter (average value of 100 fibers) of the crystalline alumina/silica-based fibers measured by microscopic observation of the inorganic fiber molded body was 5.5 μm.

The measurement results and the like of the produced inorganic fiber molded body are shown in Table 1.

Example 2

The procedure of Example 1 was repeated except that punching was performed so as to have a basis weight of 1400 g/m$^2$, a needle mark density of 10.0 marks/cm$^2$, and a multi-needle rate of 50%.

Example 3

The procedure of Example 1 was repeated except that punching was performed so as to have a basis weight of 1700 g/m$^2$, a needle mark density of 14.7 marks/cm$^2$, and a multi-needle rate of 45%.

Example 4

The procedure of Example 1 was repeated except that punching was performed so as to have a basis weight of 2000 g/m$^2$, a needle mark density of 12.4 marks/cm$^2$, and a multi-needle rate of 50%.

Comparative Example 1

The procedure of Example 1 was repeated except that punching was performed so as to have a needle mark density of 14.1 marks/cm$^2$ and a multi-needle rate of 40%, and the organic binder was impregnated so as to be 3.8% relative to the weight of the inorganic fiber molded body.

Comparative Example 2

The procedure of Example 1 was repeated except that punching was performed so as to have a needle mark density of 4.8 marks/cm$^2$ and a multi-needle rate of 10%.

Comparative Example 3

The procedure of Example 1 was repeated except that punching was performed so as to have a basis weight of 1700 g/m$^2$, a needle mark density of 5.3 marks/cm$^2$, and a multi-needle rate of 2%.

Comparative Example 4

The procedure of Example 1 was repeated except that punching was performed so as to have a basis weight of 1700 g/m$^2$, a needle mark density of 25.9 marks/cm$^2$, and a multi-needle rate of 9%.

Comparative Example 5

The procedure of Example 1 was repeated except that punching was performed so as to have a basis weight of 1400 g/m$^2$, a needle mark density of 18.8 marks/cm$^2$, and a multi-needle rate of 3%.

Comparative Example 6

The procedure of Example 1 was repeated except that punching was performed so as to have a basis weight of 1275 g/m$^2$, a needle mark density of 39.7 marks/cm$^2$, and a multi-needle rate of 0%.

[Table 1]

**Table 1**

| | | Unit | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Fiber basis weight | | g/m2 | 1200 | 1400 | 1700 | 2000 | 1200 | 1200 | 1700 | 1700 | 1400 | 1275 |
| Total volume of effective warp yarns | | mm3/cm2 | 9.8 | 8.0 | 7.2 | 8.8 | 9.4 | 4.6 | 5.8 | 4.1 | 10.5 | 20.4 |
| Needle mark density | | marks/cm2 | 10.6 | 10.0 | 14.7 | 12.4 | 14.1 | 4.8 | 5.3 | 25.9 | 18.8 | 39.7 |
| Average volume of effective warp yarns per needle mark | | mm3/mark | 0.92 | 0.70 | 0.49 | 0.71 | 0.67 | 0.96 | 1.09 | 0.16 | 0.56 | 0.51 |
| Number of effective warp yarns | | yarns/cm2 | 4.0 | 4.0 | 4.4 | 2.9 | 8.5 | 2.0 | 2.5 | 2.7 | 4.7 | 7.9 |
| Average volume per effective warp yarn | | mm3/yarn | 2.5 | 2.0 | 1.6 | 3.0 | 1.1 | 2.3 | 2.3 | 1.5 | 2.2 | 2.6 |
| Multi-needle rate | | % | 58 | 50 | 45 | 50 | 40 | 10 | 2 | 9 | 3 | 0 |
| Organic binder amount | | wt% | 0 | 0 | 0 | 0 | 3.8 | 0 | 0 | 0 | 0 | 0 |
| Hot extraction test | Load reduction rate | % | 18.7 | - | - | - | 62.4 | - | - | - | - | - |
| Normal temperature press-fit test GBD = 0.3 | Deformation amount | mm | 1.2 | - | 2.5 | 4.2 | - | 1.1 | 3.1 | 1.0 | - | 0.7 |
| | Elongation amount | mm | 2.2 | - | 1.6 | 1.4 | - | 2.6 | 2.4 | 2.0 | - | 0.5 |
| | Total deformation amount | mm | 3.4 | - | 4.1 | 5.6 | - | 3.7 | 5.5 | 3.0 | - | 1.2 |
| Normal temperature press- fit test GBD = 0.4 | Deformation amount | mm | 1.5 | - | - | - | - | 2.4 | - | - | - | - |
| | Elongation amount | mm | 1.2 | - | - | - | - | 2.6 | - | - | - | - |
| | Total deformation amount | mm | 2.7 | - | - | - | - | 5.0 | - | - | - | - |
| High-temperature cycle test | Residual surface pressure | kPa | 38.5 | 38.7 | 40.5 | 35.2 | 32.4 | 58.7 | 58.7 | 23.7 | 27.8 | 9.1 |

As shown in Table 1, the inorganic fiber molded bodies of Examples 1 to 4 had an appropriate needle mark density and an appropriate number of effective warp yarns, and thus had a small total deformations amount at the time of press-fit in the normal temperature press-fit test, maintained the residual surface pressure after the high-temperature cycle, and had a small load reduction rate in the hot extraction test.

The inorganic fiber molded body of Comparative Example 1 contained an organic binder, and thus the load reduction rate in the hot extraction test was large. When the inorganic fiber molded body of Comparative Example 1 is used in an automobile, the catalyst carrier is highly likely to fall off at the time of initial combustion.

The inorganic fiber molded body of Comparative Example 2 had a lower needle mark density than the inorganic fiber molded body of Example 1 having the same basis weight, and had a smaller number of effective warp yarns than the inorganic fiber molded body of Example 1 having the same basis weight, and thus had a large total deformation amount in the normal temperature press-fit test. The total deformation amount was larger as the GBD was larger. When the total deformation amount is large, the effective area is reduced, and thus the force for holding the catalyst carrier is reduced. Therefore, when the inorganic fiber molded body of Comparative Example 2 is used, the catalyst carrier is highly likely to fall off.

The inorganic fiber molded body of Comparative Example 3 had a lower needle mark density than the inorganic fiber molded body of Example 3 having the same basis weight, and had a smaller number of effective warp yarns than the inorganic fiber molded body of Example 3 having the same basis weight, and therefore had a large total deformation amount in the normal temperature press-fit test. When the total deformation amount is large, the effective area is reduced, and thus the force for holding the catalyst carrier is reduced. Therefore, when the inorganic fiber molded body of Comparative Example 3 is used, the catalyst carrier is highly likely to fall off.

The inorganic fiber molded body of Comparative Example 4 had a higher needle mark density than the inorganic fiber molded body of Example 3 having the same basis weight, and thus had a small residual surface pressure. Since the residual surface pressure is small, the possibility of falling off during long-term use is high when the inorganic fiber molded body of Comparative Example 4 is used.

The inorganic fiber molded body of Comparative Example 5 had a smaller residual surface pressure because the number of effective warp yarns was larger than that of the inorganic fiber molded body of Example 2 having the same basis weight and the needle mark density was higher than that of the inorganic fiber molded body of Example 2 having the same basis weight. Since the residual surface pressure is small, when the inorganic fiber molded body of Comparative Example 5 is used, there is a high possibility of falling off during long-term use.

The inorganic fiber molded body of Comparative Example 6 had a smaller residual surface pressure because the number of effective warp yarns was larger than that of the inorganic fiber molded body of Example 1 having a similar basis weight and the needle mark density was higher than that of the inorganic fiber molded body of Example 1 having a similar basis weight. Since the residual surface pressure is small, when the inorganic fiber molded body of Comparative Example 6 is used, there is a high possibility of falling off during long-term use.

Reference Signs List

2 Catalyst carrier, 3 Holding material for an exhaust gas purification device, 6 Casing, 8 Exhaust gas purification device, 10 Test piece, 10e End surface, 12 Gripping jig

## Claims

**1.** A holding material for an exhaust gas purification device, the holding material comprising:

an inorganic fiber molded body formed of an inorganic fiber, the holding material not containing a binder, wherein the inorganic fiber molded body has a needle mark extending in a thickness direction, and a warp yarn made of the inorganic fiber extending in the thickness direction is present in the needle mark;
a needle mark density is 8.0 to 18.0 marks/$cm^2$;
the number of effective warp yarns is 2.8 to 6.0 yarns/$cm^2$;
an average volume per effective warp yarn is 1.5 to 4.0 $mm^3$/yarn; and
each of the effective warp yarns represents a warp yarn having a diameter of 100 $\mu$m or more and a protrusion length of 2 mm or more among all warp yarns protruding from one peeled surface and another peeled surface in a range of 50 mm $\times$ 50 mm when a peeling method described below is performed:
Peeling method
a test piece having a width of 50 mm and a length of 150 mm is punched out from the inorganic fiber molded body; a cut having a depth of 30 mm is then made at a mid-thickness portion of one end surface of the test piece, both ends of the test piece formed by the cut are supported by a gripping jig, and then the test piece is set in a tensile tester;

and both ends of the test piece are pulled in opposite thickness directions at a speed of 500 mm/min to be split into two.

2. A holding material for an exhaust gas purification device, the holding material comprising:

an inorganic fiber molded body formed of an inorganic fiber, the holding material not containing a binder, wherein the inorganic fiber molded body has a needle mark extending in a thickness direction, and a warp yarn made of the inorganic fiber extending in the thickness direction is present in the needle mark;
a needle mark density is 8.0 to 18.0 marks/$cm^2$;
the number of effective warp yarns is 2.8 to 6.0 yarns/$cm^2$;
a residual surface pressure after a high-temperature cycle is 30 kPa or more; and
each of the effective warp yarns represents a warp yarn having a diameter of 100 μm or more and a protrusion length of 2 mm or more among all warp yarns protruding from one peeled surface and another peeled surface in a range of 50 mm × 50 mm when a peeling method described below is performed:
Peeling method
a test piece having a width of 50 mm and a length of 150 mm is punched out from the inorganic fiber molded body; a cut having a depth of 30 mm is then made at a mid-thickness portion of one end surface of the test piece, both ends of the test piece formed by the cut are supported by a gripping jig, and then the test piece is set in a tensile tester; and both ends of the test piece are pulled in opposite thickness directions at a speed of 500 mm/min to be split into two.

3. The holding material for an exhaust gas purification device according to claim 1 or 2, wherein a total volume of the effective warp yarns is 6.5 to 10.0 $mm^3/cm^2$.

4. The holding material for an exhaust gas purification device according to claim 1 or 2, wherein a basis weight is 1000 to 2000 $g/m^2$.

5. The holding material for an exhaust gas purification device according to claim 1, wherein a residual surface pressure after a high-temperature cycle is 30 kPa or more.

6. An exhaust gas purification device comprising:

a catalyst carrier;
a casing that covers an outside of the catalyst carrier; and
the holding material for an exhaust gas purification device described in claim 1 or 2 disposed between the catalyst carrier and the casing.

2
1m
1j
1h
1g
1k
1n
1
(A)
3
2
1
4
(B)
2
1
7
6
(C)
8
2
6
(D)

FIG. 1

10
10e
30mm

FIG. 2

50mm
12
10a
F
10b
10
12

FIG. 3

2
1
1t
1t
1
1t
1t
1
1t
1t
(A)
(B)
(C)

FIG. 4

3
A
B
2
1
(A)
3
A'
B'
2
1
H
C'
(B)
C

FIG. 5

TRANSLATION

## INTERNATIONAL SEARCH REPORT

International application No.
**PCT/JP2025/023079**

**A. CLASSIFICATION OF SUBJECT MATTER**

***F01N 3/28***(2006.01)i; ***D04H 1/4209***(2012.01)i; ***D04H 3/002***(2012.01)i; ***D04H 3/105***(2012.01)i; ***D04H 18/02***(2012.01)i
FI: F01N3/28 311N; D04H1/4209; D04H18/02; D04H3/105; D04H3/002

According to International Patent Classification (IPC) or to both national classification and IPC

**B. FIELDS SEARCHED**

Minimum documentation searched (classification system followed by classification symbols)

F01N3/28; D04H1/4209; D04H3/002; D04H3/105; D04H18/02

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-185310 A (MITSUBISHI CHEMICAL CORPORATION) 09 December 2021 (2021-12-09) entire text, all drawings | 1-6 |
| A | JP 2021-185279 A (MITSUBISHI CHEMICAL CORPORATION) 09 December 2021 (2021-12-09) entire text, all drawings | 1-6 |
| A | JP 2021-185280 A (MITSUBISHI CHEMICAL CORPORATION) 09 December 2021 (2021-12-09) entire text, all drawings | 1-6 |
| A | WO 2009/133613 A1 (IBIDEN CO., LTD.) 05 November 2009 (2009-11-05) entire text, all drawings | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 July 2025** | **29 July 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

TRANSLATION

## INTERNATIONAL SEARCH REPORT
**Information on patent family members**

International application No.
**PCT/JP2025/023079**

| Patent document cited in search report | Publication date (day/month/year) | Patent family member(s) | Publication date (day/month/year) |
|---|---|---|---|
| JP 2021-185310 A | 09 December 2021 | US 2022/0010470 A1<br>entire text, all drawings<br>EP 3892765 A1<br>entire text, all drawings<br>CN 113614300 A<br>entire text, all drawings<br>KR 10-2022-0038580 A<br>entire text, all drawings | |
| JP 2021-185279 A | 09 December 2021 | US 2022/0010470 A1<br>entire text, all drawings<br>EP 3892765 A1<br>entire text, all drawings<br>CN 113614300 A<br>entire text, all drawings<br>KR 10-2022-0038580 A<br>entire text, all drawings | |
| JP 2021-185280 A | 09 December 2021 | US 2022/0010470 A1<br>entire text, all drawings<br>EP 3892765 A1<br>entire text, all drawings<br>CN 113614300 A<br>entire text, all drawings<br>KR 10-2022-0038580 A<br>entire text, all drawings | |
| WO 2009/133613 A1 | 05 November 2009 | US 2009/0272600 A1<br>entire text, all drawings<br>EP 2113642 A1<br>entire text, all drawings<br>KR 10-2008-0094768 A<br>entire text, all drawings<br>CN 101571066 A<br>entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4042305 B
- JP 2602460 B
- JP 2000080547 A